# EUROPÄISCHE PATENTSCHRIFT

(11) **EP 1 533 654 B1**
(45) Veröffentlichungstag und Bekanntmachung des Hinweises auf die Patenterteilung: **19.12.2007**
(21) Anmeldenummer: 03104198.1
(22) Anmeldetag: 14.11.2003
(51) Int. Cl.: G03B 42/04

(54) **Kassette für eine Speicherleuchtstoffplatte**
Cassette for a stimulable storage phosphor plate
Cassette pour un écran d'enregistrement luminescent stimulable

(43) Veröffentlichungstag der Anmeldung: 25.05.2005
(73) Patentinhaber: Agfa-Gevaert HealthCare GmbH, 51373 Leverkusen (DE)
(72) Erfinder: Stahl, Werner, 85551, Heimstetten (DE); Klabunde, Olaf, 85635, Höhenkirchen-Siegertsbrunn (DE)

(56) Entgegenhaltungen:
- EP-A- 1 324 117
- US-A- 5 065 866
- PATENT ABSTRACTS OF JAPAN vol. 007, no. 134 (P-203), 11. Juni 1983 (1983-06-11) -& JP 58 049937 A (CANON KK), 24. März 1983 (1983-03-24)

## Beschreibung

Die Erfindung betrifft eine Kassette, insbesondere eine Röntgenkassette, nach dem Oberbegriff des Anspruchs 1 zur Aufnahme einer Speicherleuchtstoffplatte.

Eine Kassette der eingangs genannten Art wird insbesondere bei der Bilderzeugung mit Röntgenstrahlen, beispielsweise für medizinische Zwecke, eingesetzt. Die Kassette dient hierbei zur Aufnahme einer Speicherleuchtstoffplatte, in der ein mit der Röntgenstrahlung erzeugtes Bild latent gespeichert werden kann. Die Speicherleuchtstoffplatte wird während des Transportes in der Kassette gehalten und üblicherweise nur zum Auslesen des abgespeicherten Bildes aus der Kassette entnommen.

Aus der EP 1 324 117 A1 ist eine Kassette bekannt, die zur Aufnahme einer derartigen Speicherleuchtstoffplatte dient und mit einer Öffnung versehen ist, durch welche die Speicherleuchtstoffplatte in die Kassette einzuführen oder aus dieser zu entnehmen ist. Um die in der Kassette aufgenommene Speicherleuchtstoffplatte vor einem ungewollten Belichten oder auch vor Verschmutzungen und Beschädigungen zu schützen, ist die bekannte Kassette an ihrer Öffnung mit einem Verschluss versehen, der zwischen einer Schließstellung, in der er die Öffnung verschließt, und einer Freigabestellung, in der er die Öffnung zum Einführen oder Entnehmen der Speicherleuchtstoffplatte freigibt, verstellbar ist. Als Verschluss dient hierbei eine sich über die Länge der Öffnung erstreckende Leiste, welche an jedem ihrer Enden mit einer Lagerplatte versehen ist, welche ihrerseits an der Kassette drehbar gelagert sind. Zum Betätigen des Verschlusses ist ein Betätigungsmechanismus in der Kassette gehalten, welcher von außerhalb der Kassette durch ein Betätigungselement zu bedienen ist.

Nachteilig an dieser bekannten Kassette ist, dass der verwendete Verschluss die Öffnung nur unzureichend verschließt, insbesondere, wenn die Kassette durchgebogen wird. Ferner gibt der Verschluss aufgrund seiner Ausbildung in der Freigabestellung nur einen Teilbereich der Öffnung frei, wodurch das Einführen oder Entnehmen der Speicherleuchtstoffplatte erschwert wird.

Aus JP 58-049937 ist ein Filmmagazin bekannt, dessen Öffnung durch eine verschiebbare, flexible Abdeckung in der Art eines Rollos verschlossen wird, dessen Montage und Wartung relativ aufwändig ist.

Es ist Aufgabe der Erfindung, eine Kassette der eingangs genannten Art so weiterzubilden, dass ihre Öffnung möglichst groß ist und der Verschluss die Öffnung besser gegen Lichteinfall abdichtet, wobei gleichzeitig die Montage und eventuelle Reparatur- oder Wartungsarbeiten erleichtert werden sollen.

Die Erfindung löst die Aufgabe durch eine Kassette mit den Merkmalen nach Anspruch 1.

Bei der erfindungsgemäßen Kassette wird als Verschluss eine schwenkbar an der Kassette gelagerte Verschlusslamelle eingesetzt. Die Verschlusslamelle erstreckt sich über die gesamte Länge der Öffnung der Kassette und ist in mindestens einer an der Kassette ausgebildeten Schlitzführung geführt. Durch die Schlitzführung wird die Verschlusslamelle sowohl in ihrer Schließstellung, in der sie die Öffnung verschließt, als auch in ihrer Freigabestellung jederzeit definiert und zuverlässig in der Kassette geführt bzw. gehalten. Durch diese definierte Führung der Verschlusslamelle in Verbindung mit deren Verschwenkbarkeit aus dem Öffnungsbereich wird die Öffnung der erfindungsgemäßen Kassette gegenüber der aus dem Stand der Technik bekannten Kassette deutlich vergrößert. Ferner wird durch die Tatsache, dass die Verschlusslamelle zum Führen mit ihren in der Schlitzführung geführten Kanten in die Schlitzführung eingreift, eine besonders hohe Lichtdichtigkeit bei geschlossener Verschlusslamelle erreicht. Die hohe Lichtdichtigkeit ist sogar dann gegeben, wenn die Verschlusslamelle mit vergleichsweise großem Spiel in der Schlitzführung geführt ist. Gleichzeitig bewirkt die in der Schlitzführung geführte Verschlusslamelle, insbesondere in ihrer Schließstellung, eine zusätzliche Stabilisierung der Öffnung, so dass auch bei mechanischen Belastungen, die zu einem Durchbiegen der Kassette in Richtung ihrer Flachseite führen, die Öffnung nach wie vor lichtdicht verschlossen ist. Darüber hinaus ermöglicht die in der Schlitzführung geführte Verschlusslamelle auch, dass die Verschlusslamelle mit vergleichsweise geringer Kraft in ihre Freigabestellung bewegt werden kann. Dies gilt sogar, wenn die Kassette leicht durchgebogen ist.

Des Weiteren wird durch das Führen der Verschlusslamelle in der Schlitzführung verhindert, dass die Verschlusslamelle in ihrer Freigabestellung aus der Kassette herausragt, so dass die Kupplungsstelle, in welche die Kassette beim Einführen oder Entnehmen der Speicherleuchtstoffplatte in ein Gerät eingesetzt wird, vergleichsweise einfach und kompakt gestaltet sein kann.

Um die Montage und eventuelle Reparatur- oder Wartungsarbeiten zu erleichtern, wird ferner vorgeschlagen, die Verschlusslamelle oder die Verschlusslamelle gemeinsam mit der Betätigungseinrichtung, sofern diese vorgesehen ist, in ein abnehmbares Frontteil der Kassette zu integrieren, welches lösbar am Gehäuse der Kassette befestigt ist. Die Befestigung erfolgt vorzugsweise durch Schrauben. Es sind jedoch auch Rastverbindungen geeignet.

Weitere Vorteile und bevorzugte Ausführungsformen der erfindungsgemäßen Kassette werden aus der nachfolgenden Beschreibung, der Zeichnung sowie den Unteransprüchen ersichtlich.

So verläuft bei einer bevorzugten Ausführungsform der Kassette die mindestens eine Schlitzführung bogenförmig, wodurch insbesondere das Hin- und Herschwenken der Verschlusslamelle beim Öffnen und Schließen erleichtert wird. Gleichzeitig kann die Verschlusslamelle über den gesamten Schließ- bzw. Öffnungsvorgang definiert relativ zur Kassette geführt werden.

Vorzugsweise ist bei dieser Ausführungsform der Kassette auch die Verschlusslamelle in ihrem quer zur Schwenkachse verlaufenden Querschnitt bogenförmig gestaltet, d.h. sie hat einen im Querschnitt bogenförmigen Verlauf, welcher an den bogenförmigen Verlauf der Schlitzführung angepasst ist. Durch diese Maßnahme ist sichergestellt, dass die Verschlusslamelle mit äußerst geringem Kraftaufwand in der Schlitzführung hin- und herbewegt werden kann.

Um eine besonders hohe Lichtdichtigkeit am Übergang der Verschlusslamelle in die Schlitzführung zu erreichen, ist es von Vorteil, die Verschlusslamelle aus einem biegsamen Material zu fertigen. Durch die Elastizität des Materials wird erreicht, dass sich das Material aufgrund seiner Eigenspannung gleichmäßig an die Führungskanten der Schlitzführung anlegt, so dass die Verschlusslamelle in zumindest annähernd jeder Position lichtdicht in der Schlitzführung geführt ist. Als Material wird vorzugsweise ein Metallblech verwendet. Als besonders bevorzugt hat sich dabei die Verwendung eines Federstahlbleches gezeigt. Das Federstahlblech ist gegebenenfalls gehärtet und in seiner Elastizität so beschaffen, dass das die Verschlusslamelle bei Beanspruchungen innerhalb der Elastizitätsgrenze des Materials unempfindlich gegenüber äußeren Beschädigungen bleibt.

Alternativ ist es möglich, die Verschlusslamelle als Strangpressprofil auszubilden. Die Ausbildung der Verschlusslamelle als Strangpressprofil hat den Vorteil, dass die Verschlusslamelle in ihren Abmessungen und in ihrer Gestalt mit hoher Genauigkeit an den Verlauf der Schlitzführung angepasst werden kann. Gleichzeitig sind derartige Strangpressprofile mit verhältnismäßig geringem Aufwand herzustellen und verfügen bei entsprechender Gestaltung aufgrund ihres Widerstandsmomentes über eine sehr hohe Widerstandsfähigkeit gegenüber äußeren Belastungen. Bevorzugt ist das Strangpressprofil dabei aus Aluminium oder einer Aluminiumlegierung gefertigt, so dass die Kassette ein vergleichsweise geringes Gewicht aufweist.

Es ist auch möglich, die Verschlusslamelle aus Verbundmaterial herzustellen. Hierzu sind Faserverbundwerkstoffe, z.B. auf der Basis von Kohlefasern, besonders geeignet.

Bei einer weiteren besonders bevorzugten Ausführungsform der Kassette ist die Verschlusslamelle an jedem ihrer beiden Enden mit einem Mitnehmer versehen, mit dem sie an der Kassette drehbar gelagert ist. Der Mitnehmer kann beispielsweise durch eine entsprechende Betätigungseinrichtung betätigt werden, um die Verschlusslamelle zwischen ihrer Schließstellung und ihrer Freigabestellung hin und her zu bewegen. Bei einer besonders bevorzugten Weiterbildung dieser Ausführungsform steht zumindest einer der Mitnehmer mit einem an der Kassette vorgesehenen elastischen Element derart in Eingriff, dass die Verschlusslamelle in ihre Freigabestellung oder in ihre Schließstellung vorgespannt ist. Auf diese Weise wird erreicht, dass die Verschlusslamelle, je nachdem, wie der Mitnehmer mit dem elastischen Element in Eingriff steht, automatisch in ihre Freigabestellung oder in ihre Schließstellung zurückkehrt, sobald die Kraft, welche die Verschlusslamelle in der jeweiligen entgegengesetzten Betriebsstellung gehalten hat, entfällt.

Vorzugsweise ist die Verschlusslamelle in die Mitnehmer eingehängt, so dass bei einer Drehbewegung der Mitnehmer die Verschlusslamelle gleichzeitig in der Schlitzführung geführt werden kann, ohne dass hierbei ein Verkanten der Verschlusslamelle in der Schlitzführung auftritt. Durch das Einhängen der Verschlusslamelle an die Mitnehmer wird ferner erreicht, dass die einzuhaltenden Toleranzen bei der Fertigung der Verschlusslamelle und der Fertigung der Schlitzführung verhältnismäßig groß sein können, da durch die relative Beweglichkeit der Verschlusslamelle zu den Mitnehmern ein Toleranzausgleich auch nach der Montage gewährleistet ist. Ferner kann sich die Verschlusslamelle selbständig in der Schlitzführung ausrichten.

Des Weiteren wird bei einer besonders bevorzugten Ausführungsform vorgeschlagen, gegenüber der Schlitzöffnung der Schlitzführung, in der die Verschlusslamelle aufgenommen ist, einen Aufnahmeschlitz vorzusehen, welcher sich gleichfalls längs der Öffnung erstreckt und mit der die Längskante der Verschlusslamelle in deren Schließposition in Eingriff steht. Auf diese Weise wird erreicht, dass die Verschlusslamelle in ihrer Schließstellung in einer definierten Position gehalten ist und gleichzeitig auch an ihrer freien Längskante eine ausreichende Lichtdichtigkeit gewährleistet werden kann. Darüber hinaus wird die Verschlusslamelle in ihrer Schließstellung gesichert, so dass bei eventuell auftretenden mechanischen Belastungen die Verschlusslamelle zusätzlich abgestützt ist.

Bei einer besonders bevorzugten Ausführungsform der erfindungsgemäßen Kassette ist an der Kassette eine Betätigungseinrichtung vorgesehen, mit der die Verschlusslamelle zwischen ihrer Schließstellung und ihrer Freigabestellung verstellt werden kann, wobei die Betätigungseinrichtung ein Betätigungselement aufweist, welches von der Außenseite des Gehäuses her betätigt werden kann. Durch die Betätigungseinrichtung ist es möglich, die Verschlusslamelle, beispielsweise beim Einsetzen der Kassette in einen Röntgenapparat oder ein Lesegerät, von Hand oder auch durch ein automatisch betätigendes Betätigungsorgan von außen zu öffnen, so dass eine Lichtabdichtung auch beim Öffnen und Schließen der Öffnung zum Entnehmen und Einführen der Speicherleuchtstoffplatte gewährleistet werden kann, sobald die Kassette in ein Röntgen- oder Lesegerät eingesetzt ist.

Die Betätigungseinrichtung weist vorzugsweise einen Steuerschieber auf, welcher zwischen einer Ruhestellung, in der er die in ihre Freigabestellung vorgespannte Verschlusslamelle in ihrer Schließstellung hält, und einer Betätigungsstellung bewegbar ist, in der er die Verschlusslamelle freigibt. Das Vorsehen eines Steuerschiebers hat den Vorteil, dass der Steuerschieber durch lineares Verschieben zu betätigen ist, so dass eine Fehlfunktion der Betätigungseinrichtung nahezu ausgeschlossen werden kann. Durch das Halten der Verschlusslamelle in ihrer Schließstellung, wenn sich der Steuerschieber in seiner Ruhestellung befindet, wird erreicht, dass die in ihrer Freigabestellung vorgespannte Verschlusslamelle sich sehr schnell öffnet, wenn der Steuerschieber in seine Betätigungsstellung bewegt wird.

Vorzugsweise ist der Steuerschieber bei dieser Weiterbildung durch mindestens ein an der Kassette vorgesehenes elastisches Element in seiner Ruhestellung vorgespannt, so dass sich nur durch aktives Betätigen des Betätigungselementes der Betätigungseinrichtung die Verschlusslamelle in ihre Freigabestellung bewegt.

Der Steuerschieber ist bei einer besonders bevorzugten Weiterbildung dieser Ausführungsform parallel zur Längsrichtung der Öffnung verlaufend zwischen der Ruhestellung und der Betätigungsstellung verschiebbar. Des Weiteren weist der Steuerschieber mindestens eine Steuerkulisse auf, welche mit einem verschiebbar gelagerten Steuerriegel zusammenwirkt. Die Steuerkulisse ist dabei derart gestaltet, dass der Steuerschieber bei einer Bewegung von seiner Ruhestellung in die Betätigungsstellung den Steuerriegel von der Öffnung wegzieht, so dass sich die vom Steuerriegel in ihrer Schließstellung gehaltene Verschlusslamelle in ihre Freigabestellung bewegt. Wird dagegen der Steuerschieber von seiner Betätigungsstellung in seine Ruhestellung verschoben, drückt der Steuerriegel, verursacht durch die Steuerkulisse, die Verschlusslamelle in ihre Schließstellung.

Die Verschlusslamelle kann optional mit einer Antihaftbeschichtung zumindest abschnittsweise beschichtet sein, wodurch die Verschlusslamelle unempfindlich gegenüber Verschmutzungen, beispielsweise durch klebrige Flüssigkeiten, wie Kontrastmittel, Blut und ähnliches, wird. Als Beschichtungsmaterial wird besonders bevorzugt Teflon eingesetzt.

Werden Speicherleuchtstoffplatten verwendet, die mit entsprechenden Rastöffnungen und Halteöffnungen bzw. Halteelementen ausgestattet sind, wird vorgeschlagen, im Gehäuse der Kassette nahe der Öffnung eine Fixiereinrichtung anzuordnen. Die Fixiereinrichtung ist zwischen einer Verriegelungsstellung, in der sie mit der in der Kassette aufgenommenen Speicherleuchtstoffplatte bzw. den an ihr vorgesehenen Halteelementen, Halteöffnungen oder Rastöffnungen in Eingriff ist, und eine Entriegelungsstellung verstellbar, in der sie die Speicherleuchtstoffplatte freigibt. Mit Hilfe der Fixiereinrichtung ist es so möglich, die Speicherleuchtstoffplatte beispielsweise unmittelbar vor dem Entnehmen der Speicherleuchtstoffplatte aus der Kassette zu arretieren, so dass die Speicherleuchtstoffplatte in der Kassette eine definierte Position einnimmt und ein an dem Gerät, in dem die Kassette eingesetzt ist, vorgesehene Handling-Einrichtung die Speicherleuchtstoffplatte aufnehmen kann.

Bei einer besonders bevorzugten Weiterbildung der Ausführungsform der Kassette mit Fixiereinrichtung wird die Betätigungseinrichtung gleichzeitig zum Betätigen der Fixiereinrichtung eingesetzt, wobei die Betätigungseinrichtung bei einer Bewegung von ihrer Ruhestellung in ihre Betätigungsstellung die Fixiereinrichtung in ihre Entriegelungsstellung bewegt, während sie bei einer Bewegung von ihrer Betätigungsstellung in ihre Ruhestellung die Fixiereinrichtung in ihre Verriegelungsstellung bewegt. Hierdurch wird erreicht, dass die Speicherleuchtstoffplatte während des Transportes sicher in der Kassette gehalten wird. Das Betätigen der Fixiereinrichtung durch die Betätigungseinrichtung kann dabei so ausgelegt sein, dass die Fixiereinrichtung auch nach einem Öffnen der Verschlusslamelle die Speicherleuchtstoffplatte noch in einer definierten Lage arretiert.

Ist an der Speicherleuchtstoffplatte mindestens ein Haltezapfen als Halteelement für die Fixiereinrichtung vorgesehen, ist es von besonderem Vorteil, wenn die Fixiereinrichtung einen Verriegelungsschieber aufweist, an dem eine entsprechende Verriegelungsöffnung vorgesehen ist, welche mit dem Haltezapfen in Eingriff bringbar ist. Durch die Verriegelung Haltezapfen-Verriegelungsöffnung ist ein sicheres Arretieren und Positionieren der Speicherleuchtstoffplatte in der Kassette auf einfache Weise möglich.

Des Weiteren wird vorgeschlagen, die Verschlusslamelle an jedem ihrer beiden Enden an jeweils einer an der Kassette ausgebildeten Schlitzführung zu führen. Hierdurch wird erreicht, dass die Verschlusslamelle in ihrer Schließstellung definiert abgestützt ist.

Im Folgenden werden die Erfindung und ihre Vorteile anhand eines Ausführungsbeispieles unter Bezugnahme auf die beigefügte Zeichnung beschrieben.

Es zeigen:
- Fig. 1: eine perspektivische Darstellung einer erfindungsgemäßen Kassette;
- Fig. 2: eine perspektivische Darstellung der Kassette in Fig. 1 mit entfernter Abdeckung;
- Fig. 3: eine geschnittene Seitenansicht in vergrößerter Darstellung einer Verschlusslamelle mit Mitnehmer in ihrer Schließstellung;
- Fig. 4: eine der Fig. 3 entsprechende, geschnittene Seitenansicht in vergrößerter Darstellung bei in die Freigabestellung bewegter Verschlusslamelle;
- Fig. 5: eine geschnittene Seitenansicht in vergrößerter Darstellung der von einem Steuerriegel in ihrer Schließstellung gehaltenen Verschlusslamelle;
- Fig. 6: eine der Fig. 5 entsprechende, geschnittene Seitenansicht in vergrößerter Darstellung der in der Schlitzführung geführten Verschlusslamelle in ihrer Freigabestellung;
- Fig. 7: eine vergrößerte perspektivische Darstellung eines Ausschnittes der Kassette ohne Abdeckung, bei der die Verschlusslamelle in ihrer Schließstellung gehalten ist; und
- Fig. 8: eine vergrößerte perspektivische Darstellung eines Ausschnittes der Kassette ohne Abdeckung, bei der die Verschlusslamelle in ihre Freigabestellung bewegt ist.

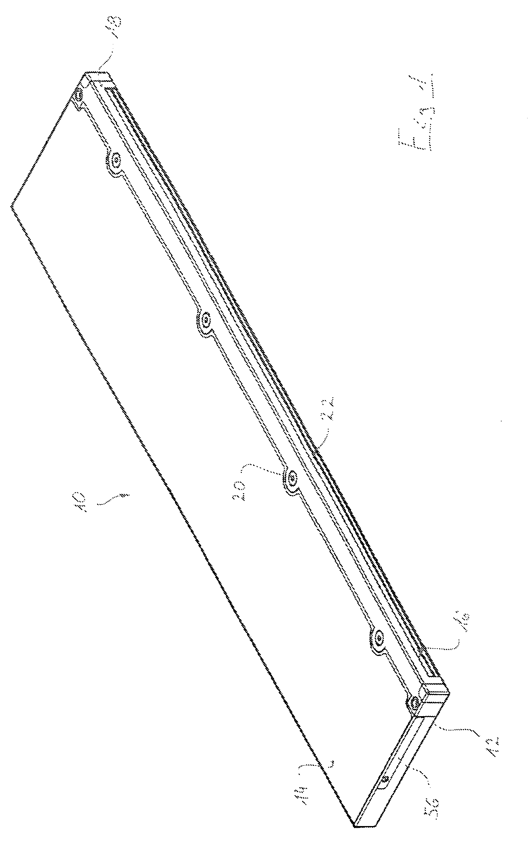

In Fig. 1 ist in perspektivischer Darstellung eine erfindungsgemäße Kassette 10 zur Aufnahme einer Speicherleuchtstoffplatte (nicht dargestellt) für einen Röntgenapparat gezeigt. Die Kassette weist eine Grundplatte 12 auf, an der eine Abdeckung 14 befestigt ist. An ihrer in Fig. 1 vorne dargestellten Längskante weist die Kassette eine Öffnung 16 auf, durch die die Speicherleuchtstoffplatte in die Kassette 10 einzuführen oder aus dieser zu entnehmen ist. Die Öffnung 16 ist von einem Frontteil 18 teilweise begrenzt, welches durch Schrauben 20 an der Abdeckung 14 der Kassette 10 befestigt ist.

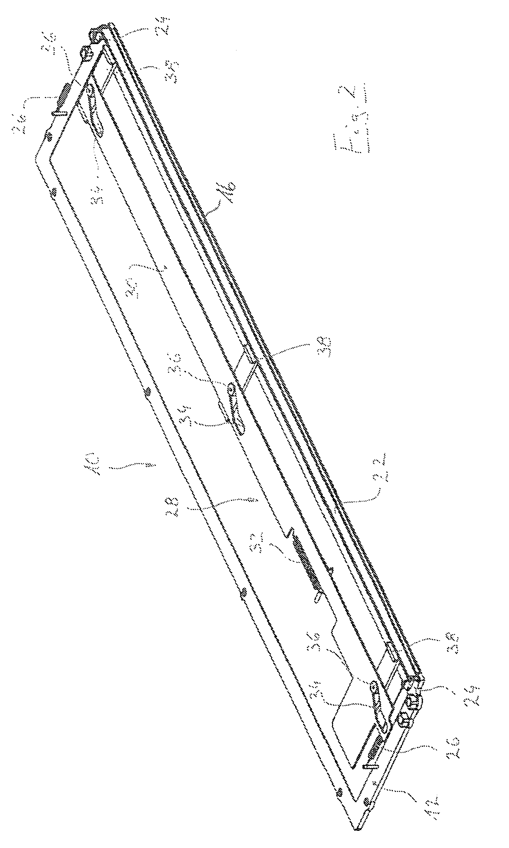

In Fig. 2 ist die Kassette 10 ohne Abdeckung 14 sowie ohne Frontteil 18 dargestellt. Wie in Fig. 2 gezeigt ist, ist im Bereich der Öffnung 16 eine Verschlusslamelle 22 angeordnet, welche an ihren beiden Enden jeweils in einen schwenkbar an der Grundplatte 12 gelagerten Mitnehmer 24 eingehängt ist. Die Verschlusslamelle 22 ist zwischen einer Schließstellung, in der sie die Öffnung 16 verschließt, und einer Freigabestellung bewegbar, in der sie die Öffnung 16 freigibt.

Wie Fig. 2 weiter zeigt, ist jeder der Mitnehmer 24 durch eine Zugfeder 26 derart vorgespannt, dass die beiden Mitnehmer 24 die Verschlusslamelle 22 in ihre Freigabestellung bewegen, wenn auf die Verschlusslamelle 22 keine Schließkraft ausgeübt wird, wie später im Detail noch erläutert werden wird.

Zum Betätigen der Verschlusslamelle 22 ist an der Grundplatte 12 eine Betätigungseinrichtung 28 vorgesehen. Die Betätigungseinrichtung 28 weist einen Steuerschieber 30 auf, welcher parallel zur Längserstreckung der Öffnung 16 zwischen einer Ruhestellung und einer Betätigungsstellung verschieblich gelagert ist. Des Weiteren weist die Betätigungseinrichtung 28 eine Zugfeder 32 auf, welche den Steuerschieber 30 in seine Ruhestellung vorspannt, so dass der Steuerschieber 30 lediglich durch Aufbringen einer entsprechenden Kraft aus seiner Ruhestellung in die Betätigungsstellung verschieblich ist.

Am Steuerschieber 30 sind insgesamt drei Steuerkulissen 34 ausgebildet, von denen jede jeweils mit einem Zapfen 36 eines Steuerriegels 38 in Eingriff steht. Jeder der Steuerriegel 38 ist quer zur Verschieberichtung des Steuerschiebers 30 verschieblich an der Grundplatte 12 gelagert und kann zwischen einer ersten Stellung, in der er die Verschlusslamelle 22 gegen die Kraft der Zugfeder 26 in ihre Schließstellung drückt, und einer zweiten Stellung hin und her bewegt werden, in der der Steuerriegel 38 von der Öffnung 16 weggezogen ist, so dass die Verschlusslamelle 22 durch die Kraft der Zugfeder 26 in ihre Freigabestellung bewegt wird.

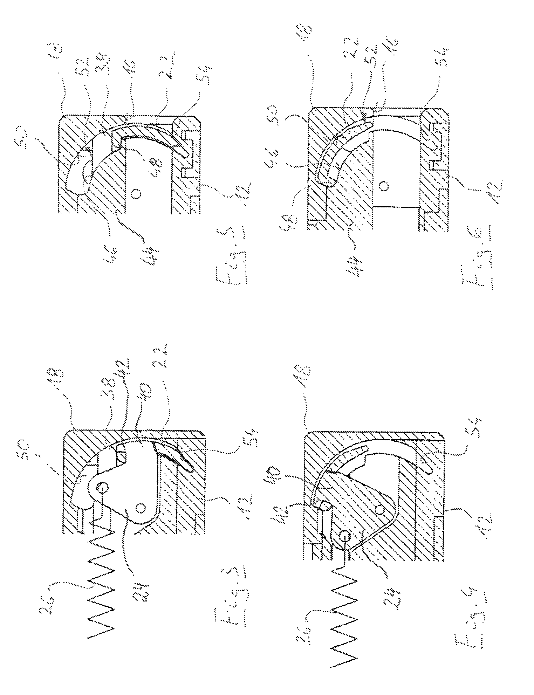

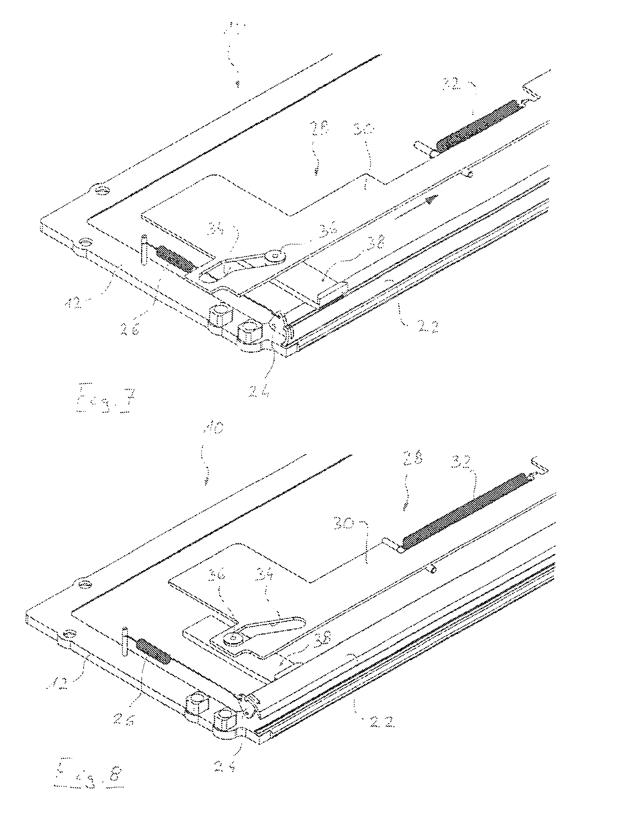

In den Fig. 3 bis 6 sind jeweils zwei Schnitte quer durch das Frontteil 18 und die Verschlusslamelle 22 an unterschiedlichen Stellen des Frontteils 18 gezeigt, wobei die Fig. 3 und 5 die Verschlusslamelle 22 in ihrer Schließstellung zeigen, während die Fig. 4 und 6 die Verschlusslamelle 22 in ihrer Freigabestellung darstellen.

Wie den Fig. 3 und 4 zu entnehmen ist, ist die Verschlusslamelle 22 mit einer Aufnahmeöffnung 40 versehen, mit der sie an einem Haken 42 des Mitnehmers 24 eingehängt ist. In entsprechender Weise ist die Verschlusslamelle 22 auch an ihrem anderen Ende an dem identisch ausgebildeten Mitnehmer 24 eingehängt.

Wie die Fig. 5 und 6 zeigen, ist eine Leiste 44 vorgesehen, welche sich parallel zur Öffnung 16 erstreckt und diese nach oben hin begrenzt. An der Vorderfläche der Leiste 44 ist eine abgerundete Anlagefläche 46 vorgesehen, an der die Verschlusslamelle 22 mit einer Kante 48 geführt ist. Das Frontteil 18 hat an seiner Innenseite eine Anlagefläche 50, welche komplementär zur Anlagefläche 46 der Leiste 44 ausgebildet ist. Die beiden Anlageflächen 46 und 50 bilden bei an der Grundplatte 12 befestigtem Frontteil 18 eine Schlitzführung 52, in welcher die Verschlusslamelle 22 definiert geführt ist. Die Verschlusslamelle 22 ist hierzu im Querschnitt bogenförmig gestaltet und an den Verlauf der beiden Anlageflächen 46 und 50 angepasst.

An der die Unterseite der Öffnung 16 begrenzenden Flachseite der Grundplatte 12 ist ein parallel zur Öffnung 16 verlaufender Aufnahmeschlitz 54 ausgebildet, welcher zur Schlitzführung 52 derart angeordnet ist, dass die Verschlusslamelle 22 in ihrer Schließstellung in den Aufnahmeschlitz 54 eingreift, wie in den Fig. 3 und 5 gezeigt ist. Hierdurch wird erreicht, dass die Verschlusslamelle 22 eine definierte Lage relativ zur Kassette 10 in ihrer Schließstellung einnimmt, wobei durch das Ineingriffstehen mit dem Aufnahmeschlitz 54 einerseits und der an der Anlagefläche 46 der Leiste 44 anliegenden Verschlusslamelle 22 andererseits eine sehr hohe Lichtdichtigkeit gewährleistet werden kann, so dass ein unerwünschter Lichteinfall in die Kassette 10 mit hoher Zuverlässigkeit verhindert wird. Insbesondere bei mechanischer Belastung der Kassette 10 von deren Ober- und/oder Unterseite her ergibt sich darüber hinaus der Vorteil, dass die Abdichtung gegen Lichteinfall noch weiter erhöht wird, da in diesem Fall die Verschlusslamelle 22 noch tiefer in den Aufnahmeschlitz 54 eingreift oder zumindest noch fester in diesem gehalten wird.

In der oben beschriebenen Ausgestaltung ist die Verschlusslamelle 22 äußerst leichtgängig und kann sich nicht in der Schlitzführung 52 verklemmen. Wäre nämlich die Verschlusslamelle 22 nicht in den Mitnehmer 24 eingehängt, würde sie durch den Druck des Steuerriegels 38 an den oberen Bereich der inneren Anlagefläche 50 des Frontteils 18 gepresst werden und könnte dort klemmen.

Durch die erfindungsgemäße Verbindung der Verschlusslamelle 22 mit dem Mitnehmer 24 mittels Einhängung oder drehbarer Lagerung dagegen berührt die Verschlusslamelle 22 die Schlitzführung 52 in diesem Bereich nicht. Die Stelle, an welcher sich die Verschlusslamelle 22 und die Schlitzführung 52 berühren, wird hierbei deutlich weiter in Richtung des Aufnahmeschlitzes 54 verlegt, wodurch nur noch geringe Reibungskräfte zwischen Verschlusslamelle 22 und Schlitzführung 52 auftreten.

Nachfolgend wird unter Bezugnahme auf die Fig. 2, 7 und 8 die Arbeitsweise der Betätigungseinrichtung 28 im Detail beschrieben. Wie zuvor bereits erläutert wurde, wird der Steuerschieber 30 durch die Zugfeder 32 in seine Ruhestellung vorgespannt, in der er nahe der linken Seitenkante der Grundplatte 12 angeordnet ist. In dieser Ruhestellung drückt der Steuerschieber 30 durch das Zusammenwirken der Steuerkulissen 34 mit den Zapfen 36 die Steuerriegel 38 in Richtung der Öffnung 16, so dass diese die Verschlusslamelle 22 in ihrer Schließstellung gegen die Kraft der Zugfedern 26 halten. Dieser Zustand ist beispielsweise in Fig. 3 im Detail gezeigt.

Soll nun die Öffnung 16 geöffnet werden - beispielsweise nachdem die Kassette 10 in ein Gerät zum Auslesen der in der Speicherleuchtstoffschicht latent gespeicherten Bildinformation eingeführt worden ist - wird der Steuerschieber 30 von außen der Kassette 10, beispielsweise manuell oder mit Hilfe eines entsprechenden Betätigungsorgans, durch ein an der linken Stirnseite der Kassette 10 vorgesehenes Betätigungselement 56 (vgl. Fig. 1) betätigt. Dabei wird der Steuerschieber 30 gegen die Kraft der Zugfeder 32 nach rechts verschoben, wie insbesondere in Fig. 8 durch den Pfeil angedeutet ist, wobei durch das Zusammenwirken der Steuerkulissen 34 mit den Zapfen 36 die Steuerriegel 38 nach hinten von der Öffnung 16 wegbewegt werden.

Sobald die Steuerriegel 38 von der Öffnung 16 wegbewegt werden, schwenkt die Verschlusslamelle 22 durch die Kraft der an den beiden Mitnehmern 24 angreifenden Zugfedern 26 in ihre Freigabestellung, wie insbesondere in Fig. 4 gezeigt ist. In dieser Freigabestellung kann die Speicherleuchtstoffplatte problemlos in die Kassette 10 eingeführt oder aus dieser entnommen werden.

Soll die Öffnung 16 wieder geschlossen werden, muss lediglich das Betätigungselement 56 ausgelassen werden, so dass der Steuerschieber 30 durch die Wirkung der Zugfeder 32 wieder in seine Ruhestellung zurückkehrt. Dabei werden die Steuerriegel durch die mit den Steuerkulissen 34 in Eingriff stehenden Zapfen 36 wieder nach vorne in Richtung der Öffnung 16 verschoben und drücken dabei die Verschlusslamelle 22 gegen die Wirkung der Zugfedern 26 wieder in ihre Schließstellung.

Im Gegensatz zu konventionellen Kassetten, bei welchen ein Herunterfallen der Kassette ein Aufspringen des Kassettenverschlusses zur Folge haben kann, wird durch den oben beschriebenen Schließmechanismus erreicht, dass bei einem Aufprall der erfindungsgemäßen Kassette 10 der Steuerschieber 30 nur kurzze i-tig - d.h. für Bruchteile einer Sekunde - die Verschlusslamelle 22 öffnet, diese aufgrund seiner Vorspannung aber sofort wieder schließt. Eine mögliche Belichtung der in der Kassette 10 befindlichen Speicherleuchtstoffplatte während dieser kurzen Zeit ist vernachlässigbar.

Mit Hilfe der erfindungsgemäßen Anordnung aus Verschlusslamelle und Schlitzführung 52 wird eine sehr hohe Lichtdichtigkeit der Kassette 10 erreicht, wobei durch den bogenförmigen Querschnitt der Verschlusslamelle 22 gleichzeitig eine besonders hohe Steifigkeit im Öffnungsbereich der Kassette 10 gewährleistet ist.

Da die Verschlusslamelle 22 in ihrer Schließstellung mit dem Aufnahmeschlitz 54 im Eingriff ist, wird ferner sichergestellt, dass die Öffnung 16 auch lichtdicht verschlossen bleibt, wenn die Kassette 10 äußeren deformierenden Belastungen ausgesetzt ist und durchgebogen wird, beispielsweise, wenn die Kassette 10 für eine Röntgenaufnahme unter einem Patienten auf einer unebenen Oberfläche angeordnet wird.

Die Verschlusslamelle 22 ist vorzugsweise mit Teflon beschichtet, so dass im Falle einer Verunreinigung, beispielsweise durch Kontrastmittel, die Verschlusslamelle 22 einfach zu reinigen ist, wobei die Teflonbeschichtung darüber hinaus die Reibung in der Schlitzführung 52 vermindert.

Durch das Einhängen der Verschlusslamelle 22 in die Mitnehmer 24 wird erreicht, dass sich die Verschlusslamelle 22 bei ihrer Bewegung innerhalb der Schlitzführung 52 und ihrem Ineingriffkommen in den Aufnahmeschlitz 54 geringfügig relativ zu den Mitnehmern 24 verlagern kann, so dass ein selbständiges Ausrichten der Verschlusslamelle 22 in der Schlitzführung 52 und dem Aufna h-meschlitz 54 gewährleistet ist. Hierdurch ist insbesondere auch die Fertigung der erfindungsgemäßen Kassette 10 vereinfacht, da die Verschlusslamelle 22 mit vergleichsweise großen Toleranzen gefertigt werden kann.

Durch das Abnehmen des Frontteils 18 ist die Verschlusslamelle 22 leicht zugänglich und kann, beispielsweise zur Wartungs-, Reinigungs- oder Reparaturarbeiten, problemlos von den Mitnehmern 24 gelöst und mit diesen wieder verbunden werden.

### Bezugszeichenliste:

- 10: Kassette
- 12: Grundplatte
- 14: Abdeckung
- 16: Öffnung
- 18: Frontteil
- 20: Schrauben
- 22: Verschlusslamelle
- 24: Mitnehmer
- 26: Zugfeder
- 28: Betätigungseinrichtung
- 30: Steuerschieber
- 32: Zugfeder
- 34: Steuerkulissen
- 36: Zapfen
- 38: Steuerriegel
- 40: Aufnahmeöffnung
- 42: Haken
- 44: Leiste
- 46: Anlagefläche
- 48: Kante
- 50: Anlagefläche
- 52: Schlitzführung
- 54: Aufnahmeschlitz
- 56: Betätigungselement

## Patentansprüche

1. Kassette, insbesondere Röntgenkassette, zur Aufnahme einer Speicherleuchtstoffplatte, mit
- einer Öffnung (16), durch welche die Speicherleuchtstoffplatte in die Kassette (10) einzuführen oder aus dieser zu entnehmen ist, und
- einem Verschluss (22), der zwischen einer Schließstellung, in der er die Öffnung (16) verschließt, und einer Freigabestellung, in der er die Öffnung (16) zum Einführen oder Entnehmen der Speicherleuchtstoffplatte freigibt, verstellbar ist,
wobei als Verschluss eine schwenkbar an der Kassette (10) gelagerte längliche Verschlusslamelle (22) dient, welche sich über die gesamte Länge der Öffnung (16) erstreckt und in mindestens einer an der Kassette (10) ausgebildeten Schlitzführung (52) geführt ist, wobei die Verschlusslamelle (22) mit ihren in der Schlitzführung (52) geführten Kanten in die Schlitzführung (52) eingreift,
**dadurch gekennzeichnet, dass**
die Verschlusslamelle (22) in ein abnehmbares Frontteil (18) der Kassette (10) integriert ist, welches lösbar, vorzugsweise durch Schrauben, an der Kassette (10) befestigt ist.

2. Kassette nach Anspruch 1, **dadurch gekennzeichnet, dass** mindestens eine Schlitzführung (52) bogenförmig verläuft.

3. Kassette nach Anspruch 2, **dadurch gekennzeichnet, dass** die Verschlusslamelle (22) in ihrem quer zur Schwenkachse verlaufenden Querschnitt einen bogenförmigen Verlauf aufweist, welcher an den bogenförmigen Verlauf der Schlitzführung angepasst ist.

4. Kassette nach Anspruch 1, 2 oder 3, **dadurch gekennzeichnet, dass** die Verschlusslamelle (22) aus einem biegsamen Material, vorzugsweise einem Metallblech, besonders bevorzugt aus einem Federstahlblech, gefertigt ist.

5. Kassette nach Anspruch 1, 2 oder 3, **dadurch gekennzeichnet, dass** die Verschlusslamelle (22) als Strangpressprofil, vorzugsweise aus Aluminium, gefertigt ist.

6. Kassette nach mindestens einem der Ansprüche 1 bis 5, **dadurch gekennzeichnet, dass** die Verschlusslamelle (22) an jedem ihrer beiden Enden einen Mitnehmer (24) aufweist, mit dem sie an der Kassette (10) drehbar gelagert ist, wobei sie bei einer Drehbewegung der Mitnehmer in der Schlitzführung geführt werden kann.

7. Kassette nach Anspruch 6, **dadurch gekennzeichnet, dass** zumindest einer der Mitnehmer (24) mit einem an der Kassette (10) vorgesehenen elastischen Element (26) derart in Einriff steht, dass die Verschlusslamelle (22) in ihre Freigabestellung oder in ihre Schließstellung vorgespannt ist.

8. Kassette nach Anspruch 6 oder 7, **dadurch gekennzeichnet, dass** die Verschlusslamelle (22) in die Mitnehmer (24) eingehängt ist, so dass sie relativ zu den Mitnehmen beweglich ist und sich selbständig in der Schlitzführung ausrichten kann.

9. Kassette nach mindestens einem der vorhergehenden Ansprüche, **dadurch gekennzeichnet, dass** an einer die Öffnung (16) begrenzenden Grundplatte (12) der Kassette (10) ein parallel zur Öffnung (16) verlaufender Aufnahmeschlitz (54) vorgesehen ist, welcher derart angeordnet ist, dass die Verschlusslamelle (22) in ihrer Schließstellung in den Aufnahmeschlitz (54) eingreift.

10. Kassette nach mindestens einem der vorhergehenden Ansprüche, **dadurch gekennzeichnet, dass** an der Kassette (10) eine Betätigungseinrichtung (28) zum Verstellen der Verschlusslamelle (22) zwischen ihrer Schließstellung und ihrer Freigabestellung vorgesehen ist, und dass die Betätigungseinrichtung (28) ein Betätigungselement (56) aufweist, welches von der Außenseite der Kassette (10) her betätigt werden kann.

11. Kassette nach Anspruch 10, **dadurch gekennzeichnet, dass** die Betätigungseinrichtung (28) einen Steuerschieber (30) aufweist, welcher zwischen einer Ruhestellung, in der er die in ihre Freigabestellung vorgespannte Verschlusslamelle (22) in ihrer Schließstellung hält, und einer Betätigungsstellung bewegbar ist, in der er die Verschlusslamelle (22) freigibt.

12. Kassette nach Anspruch 11, **dadurch gekennzeichnet, dass** der Steuerschieber (30) durch mindestens ein an der Kassette (10) vorgesehenes elastisches Element (32) in seine Ruhestellung vorgespannt ist.

13. Kassette nach einem der Ansprüche 11 oder 12, **dadurch gekennzeichnet, dass** der Steuerschieber (30) parallel zur Längsrichtung der Öffnung (16) verlaufend zwischen der Ruhestellung und der Betätigungsstellung verschiebbar ist, und dass der Steuerschieber (30) mindestens eine Steuerkulisse (34) aufweist, welche mit einem verschiebbar gelagerten Steuerriegel (36) derart zusammenwirkt, dass der Steuerschieber (30) bei einer Bewegung von seiner Ruhestellung in die Betätigungsstellung den Steuerriegel (36) von der Öffnung (16) wegzieht, so dass sich die von dem Steuerriegel (36) in ihrer Schließstellung gehaltene Verschlusslamelle (22) in ihre Freigabestellung bewegt, während der Steuerschieber (30) bei einer Bewegung von seiner Betätigungsstellung in die Ruhestellung den Steuerriegel (36) in Richtung der Öffnung (16) verschiebt, so dass der Steuerriegel (36) die Verschlusslamelle (22) in ihrer Schließstellung drückt.

14. Kassette nach einem der Ansprüche 10-13, **dadurch gekennzeichnet, dass** die Verschlusslamelle (22) gemeinsam mit der Betätigungseinrichtung (28) in das abnehmbare Frontteil (18) der Kassette (10) integriert ist bzw. sind, welches lösbar, vorzugsweise durch Schrauben, an der Kassette (10) befestigt ist.

15. Kassette nach mindestens einem der vorhergehenden Ansprüche, **dadurch gekennzeichnet, dass** die Verschlusslamelle (22) mit einer Antihaftbeschichtung, vorzugsweise einer Teflonbeschichtung, zumindest abschnittsweise beschichtet ist.

16. Kassette nach mindestens einem der vorhergehenden Ansprüche, **dadurch gekennzeichnet, dass** im Gehäuse der Kassette (10) nahe der Öffnung (16) eine Fixiereinrichtung angeordnet ist, welche zwischen einer Verriegelungsstellung, in der sie mit der in der Kassette (10) aufgenommenen Speicherleuchtstoffplatte in Eingriff ist, und einer Entriegelungsstellung verstellbar ist, in der sie die Speicherleuchtstoffplatte freigibt.

17. Kassette nach den Ansprüchen 10 und 16, **dadurch gekennzeichnet, dass** die Betätigungseinrichtung (28) gleichzeitig zum Betätigen der Fixiereinrichtung dient und bei einer Bewegung von ihrer Ruhestellung in ihre Betätigungsstellung die Fixiereinrichtung in ihre Entriegelungsstellung bewegt, während sie bei einer Bewegung von ihrer Betätigungsstellung in ihre Ruhestellung die Fixiereinrichtung in ihre Verriegelungsstellung bewegt.

18. Kassette nach mindestens einem der Ansprüche 16 oder 17, **dadurch gekennzeichnet, dass** die Fixiereinrichtung einen Verriegelungsschieber aufweist, an dem eine Verriegelungsöffnung vorgesehen ist, welche mit einem von der Speicherleuchtstoffplatte abstehenden Haltezapfen zum Verriegeln in Eingriff bringbar ist.

19. Kassette nach einem der vorhergehenden Ansprüche, **dadurch gekennzeichnet, dass** die Verschlusslamelle (22) in zwei an der Kassette (10) ausgebildeten Schlitzführungen (52) geführt wird, wobei die Verschlusslamelle (22) an jedem ihrer beiden Enden an jeweils einer an der Kassette (10) ausgebildeten Schlitzführung geführt ist.

## Claims

1. A cassette, in particular an X-ray cassette, for accommodating a storage phosphor plate with
- an opening (16) through which the storage phosphor plate is introduced into or removed
from the cassette (10), and
- a closure element (22) which can be shifted between a closure position in which it closes the opening (16), and a release position in which it frees the opening (16) for introduction or removal of the storage phosphor plate,
an oblong closure plate (22) mounted pivotably on the cassette (10) acting as the closure element which extends over the whole length of the opening (16) and is guided within at least one slot guide (52) formed on the cassette (10), the closure plate (22) engaging into the slot guide (52) with its edges guided in the slot guide (52),
**characterised in that**
the closure plate (22) is integrated into a detachable front part (18) of the cassette (10) which is releaseably attached to the cassette (10), preferably by screws.

2. The cassette according to Claim 1, **characterised in that** at least one slot guide (52) extends in an arch shape.

3. The cassette according to Claim 2, **characterised in that** the closure plate (22) is arcuate in form in its cross-section extending at right angles to the pivot axis, said form corresponding to the arcuate form of the slot guide.

4. The cassette according to Claims 1, 2 or 3, **characterised in that** the closure plate (22) is made from a flexible material, preferably a sheet metal, and particularly preferably a spring steel sheet.

5. The cassette according to Claims 1, 2 or 3, **characterised in that** the closure plate (22) is produced as an extrusion moulded profile, preferably made from aluminium.

6. The cassette according to at least one of Claims 1 to 5, **characterised in that** the closure plate (22) has a carrier (24) on each of its two ends with which it is pivotably mounted on the cassette (10), it being possible for it to be guided within the slot guide when there is a pivot movement of the carriers.

7. The cassette according to Claim 6, **characterised in that** at least one of the carriers (24) engages with an elastic element (26) provided on the cassette (10) so that the closure plate (22) is pre-tensioned into its release position or into its closure position.

8. The cassette according to Claim 6 or 7, **characterised in that** the closure plate (22) is suspended in the carriers (24) so that it can move in relation to the carriers and can align itself independently in the slot guide.

9. The cassette in accordance with at least one of the preceding claims, **characterised in that** a holding slot (54) extending parallel to the opening (16) is provided on a base plate (12) of the cassette (10) adjacent to the opening (16) which is arranged such that in its closure position the closure plate (22) engages in the holding slot (54).

10. The cassette according to at least one of the preceding claims, **characterised in that** an actuation device (28) for shifting the closure plate (22) between its closure position and its release position is provided on the cassette (10), and that the actuation device (28) has an actuation element (56) which can be actuated from the outer side of the cassette (10).

11. The cassette according to Claim 10, **characterised in that** the actuation device (28) has a control slide (30) which is moveable between a rest position, in which it holds the closure plate (22), which is pre-tensioned into its release position, in its closure position, and an actuation position in which it releases the closure plate (22).

12. The cassette according to Claim 11, **characterised in that** the control slide (30) is pre-tensioned into its rest position by at least one elastic element (32) provided on the cassette (10).

13. The cassette according to either of Claims 11 or 12, **characterised in that** the control slide (30) extending parallel to the longitudinal direction of the opening (16) can be shifted between the rest position and the actuation position, and that the control slide (30) has at least one control link (34) which interacts with a moveably mounted control bolt (36) such that with a movement from its rest position into the actuation position the control slide (30) pulls the control bolt (36) away from the opening (16) so that the closure plate (22) held in its closure position by the control bolt (36) moves into its release position whereas with a movement from its actuation position into the rest position the control slide (30) moves the control bolt (36) in the direction of the opening (16) so that the control bolt (36) presses the closure plate (22) in its closure position.

14. The cassette according to any of Claims 10-13, **characterised in that** the closure plate (22) together with the actuation device (28) is or are integrated into the detachable front part (18) of the cassette (10) which is attached to the cassette (10) releaseably, preferably by screws.

15. The cassette according to at least one of the preceding claims, **characterised in that** the closure plate (22) is coated with an anti-adhesion coating, preferably a teflon coating, at least in sections.

16. The cassette according to at least one of the preceding claims, **characterised in that** disposed in the housing of the cassette (10), close to the opening (16), there is a fixing device which can be shifted between a locking position, in which it engages which the storage phosphor plate held in the cassette (10) and a release position in which it releases the storage phosphor plate.

17. The cassette according to Claims 10 and 16, **characterised in that** the actuation device (28) serves at the same time to actuate the fixing device and, with a movement from its rest position into its actuation position, moves the fixing device into its release position, whereas with a movement from its actuation position into its rest position, it moves the fixing device into its locking position.

18. The cassette according to at least one of Claims 16 or 17, **characterised in that** the fixing device has a locking slide on which a locking opening is provided which can engage with a holding pin projecting from the storage phosphor plate for locking.

19. The cassette according to any of the preceding claims, **characterised in that** the closure plate (22) is guided in two slot guides (52) formed on the cassette (10), the closure plate (22) being guided on each of its two ends on a slot guide respectively formed on the cassette (10).

## Revendications

1. Cassette, notamment cassette de radiographie, destinée à recevoir une plaque phospholuminescente à mémoire, comprenant
- une ouverture (16) à travers laquelle la plaque phospholuminescente à mémoire doit être introduite dans la cassette (10) ou extraite de cette dernière, et
- une obturation (22) pouvant être déplacée entre une position de fermeture, dans laquelle elle occulte l'ouverture (16), et une position de dégagement dans laquelle elle libère ladite ouverture (16), en vue de l'introduction ou du prélèvement de la plaque phospholuminescente à mémoire,
sachant que l'obturation est matérialisée par une lamelle obturatrice allongée (22) qui est montée à pivotement sur la cassette (10), s'étend sur toute la longueur de l'ouverture (16) et est guidée dans au moins un guidage (52) par fente ménagé sur ladite cassette (10), ladite lamelle obturatrice (22) pénétrant, dans le guidage (52) par fente, par ses bords guidés dans ledit guidage (52) par fente,
**caractérisée par le fait que**
la lamelle obturatrice (22) est intégrée dans une pièce frontale amovible (18) de la cassette (10), qui est fixée à ladite cassette (10) de manière libérable, de préférence par des vis.

2. Cassette selon la revendication 1, **caractérisée par le fait qu'**au moins un guidage (52) par fente s'étend en arc de cercle.

3. Cassette selon la revendication 2, **caractérisée par le fait que** la lamelle obturatrice (22) présente, sur sa section transversale s'étendant transversalement par rapport à l'axe de pivotement, un profil en arc de cercle adapté au profil en arc de cercle du guidage par fente.

4. Cassette selon la revendication 1, 2 ou 3, **caractérisée par le fait que** la lamelle obturatrice (22) est fabriquée en un matériau souple, de préférence en une tôle métallique, de manière particulièrement préférentielle en une tôle d'acier à ressorts.

5. Cassette selon la revendication 1, 2 ou 3, **caractérisée par le fait que** la lamelle obturatrice (22) est produite en tant que profilé extrudé, de préférence en aluminium.

6. Cassette selon au moins l'une des revendications 1 à 5, **caractérisée par le fait que** la lamelle obturatrice (22) comporte, à chacune de ses deux extrémités, un organe d'entraînement (24) par lequel elle est montée à rotation sur la cassette (10), sachant qu'elle peut être guidée dans le guidage par fente lors d'un mouvement rotatoire desdits organes d'entraînement.

7. Cassette selon la revendication 6, **caractérisée par le fait qu'**au moins l'un des organes d'entraînement (24) est en prise avec un élément élastique (26) prévu sur la cassette (10), de façon telle que la lamelle obturatrice (22) soit précontrainte vers sa position de dégagement ou vers sa position de fermeture.

8. Cassette selon la revendication 6 ou 7, **caractérisée par le fait que** la lamelle obturatrice (22) est accrochée dans les organes d'entraînement (24), de telle sorte qu'elle soit mobile vis-à-vis desdits organes d'entraînement et puisse s'orienter, de manière autonome, dans le guidage par fente.

9. Cassette selon au moins l'une des revendications précédentes, **caractérisée par le fait qu'**une fente réceptrice (54) s'étendant parallèlement à l'ouverture (16), prévue sur une platine d'embase (12) de la cassette (10) délimitant ladite ouverture (16), est disposée de façon telle que la lamelle obturatrice (22) pénètre dans ladite fente réceptrice (54) lorsqu'elle occupe sa position de fermeture.

10. Cassette selon au moins l'une des revendications précédentes, **caractérisée par le fait qu'**un dispositif d'actionnement (28) est prévu, sur la cassette (10), afin de déplacer la lamelle obturatrice (22) entre sa position de fermeture et sa position de dégagement ; et **par le fait que** ledit dispositif d'actionnement (28) comporte un élément d'actionnement (56) pouvant être manoeuvré depuis la face extérieure de ladite cassette (10).

11. Cassette selon la revendication 10, **caractérisée par le fait que** le dispositif d'actionnement (28) possède un curseur de commande (30) mobile entre une position de repos dans laquelle il maintient, dans sa position de fermeture, la lamelle obturatrice (22) précontrainte vers sa position de dégagement, et une position de manoeuvre dans laquelle il libère ladite lamelle obturatrice (22).

12. Cassette selon la revendication 11, **caractérisée par le fait que** le curseur de commande (30) est précontraint, vers sa position de repos, par au moins un élément élastique (32) prévu sur la cassette (10).

13. Cassette selon l'une des revendications 11 ou 12, **caractérisée par le fait que** le curseur de commande (30) peut coulisser, entre la position de repos et la position de manoeuvre, en s'étendant parallèlement à la direction longitudinale de l'ouverture (16) ; et **par le fait que** ledit curseur de commande (30) présente au moins une coulisse de commande (34) coopérant avec un verrou de commande (36) monté à coulissement, de telle sorte que le curseur de commande (30) tire le verrou de commande (36) à l'écart de l'ouverture (16) lorsqu'il se meut de sa position de repos à la position de manoeuvre, de façon telle que la lamelle obturatrice (22), maintenue dans sa position de fermeture par le verrou de commande (36), se meuve vers sa position de dégagement, tandis que ledit curseur de commande (30) déplace ledit verrou de commande (36) en direction de l'ouverture (16), lors d'un mouvement de sa position de manoeuvre à la position de repos, de façon telle que ledit verrou de commande (36) pousse ladite lamelle obturatrice (22) vers sa position de fermeture.

14. Cassette selon l'une des revendications 10-13, **caractérisée par le fait que** la lamelle obturatrice (22) est intégrée, conjointement au dispositif d'actionnement (28), dans la pièce frontale amovible (18) de la cassette (10), qui est fixée de manière libérable à ladite cassette (10), de préférence par des vis.

15. Cassette selon au moins l'une des revendications précédentes, **caractérisée par le fait que** la lamelle obturatrice (22) est revêtue, au moins par zones, d'un revêtement antiadhérent, de préférence d'un revêtement de Téflon.

16. Cassette selon au moins l'une des revendications précédentes, **caractérisée par** la présence dans le boîtier de la cassette (10), à proximité de l'ouverture (16), d'un système de verrouillage à demeure pouvant être déplacé entre une position de verrouillage dans laquelle il est en prise avec la plaque phospholuminescente à mémoire logée dans ladite cassette (10), et une position de déverrouillage dans laquelle il libère ladite plaque phospholuminescente à mémoire.

17. Cassette selon les revendications 10 et 16, **caractérisée par le fait que** le dispositif d'actionnement (28) sert simultanément à actionner le système de verrouillage à demeure et amène ledit système de verrouillage à demeure à sa position de déverrouillage, lors d'un mouvement de sa position de repos à sa position de manoeuvre, tandis qu'il amène ledit système de verrouillage à demeure à sa position de verrouillage lors d'un mouvement depuis sa position de manoeuvre jusqu'à sa position de repos.

18. Cassette selon au moins l'une des revendications 16 ou 17, **caractérisée par le fait que** le système de verrouillage à demeure comporte un curseur de verrouillage sur lequel est prévu un orifice de verrouillage pouvant être mis en prise, en vue du verrouillage, avec un téton d'arrêt saillant au-delà de la plaque phospholuminescente à mémoire.

19. Cassette selon l'une des revendications précédentes, **caractérisée par le fait que** la lamelle obturatrice (22) est guidée dans deux guidages par fentes (52) façonnés sur la cassette (10), ladite lamelle obturatrice (22) étant guidée, à chacune de ses deux extrémités, sur un guidage par fente respectivement façonné sur ladite cassette (10).
